(19) Europäisches Patentamt / European Patent Office / Office européen des brevets

(11) **EP 1 275 109 B2**

(12) **NOUVEAU FASCICULE DE BREVET EUROPEEN**
Après la procédure d'opposition

(45) Date de publication et mention de la décision concernant l'opposition:
**07.11.2018  Bulletin 2018/45**

(45) Mention de la délivrance du brevet:
**15.09.2004  Bulletin 2004/38**

(21) Numéro de dépôt: **01925627.0**

(22) Date de dépôt: **12.04.2001**

(51) Int Cl.:
***G10L 21/02*** (2013.01)

(86) Numéro de dépôt international:
**PCT/FR2001/001126**

(87) Numéro de publication internationale:
**WO 2001/080223 (25.10.2001 Gazette 2001/43)**

(54) **MÉTHODE ET DISPOSITIF D'ENRICHISSEMENT SPECTRAL**

VERFAHREN UND VORRICHTUNG ZUR SPEKTRALEN ANREICHERUNG

SPECTRAL ENHANCING METHOD AND DEVICE

(84) Etats contractants désignés:
**AT BE CH CY DE DK ES FI FR GB GR IE IT LI LU MC NL PT SE TR**

(30) Priorité: **18.04.2000  FR 0005023**

(43) Date de publication de la demande:
**15.01.2003  Bulletin 2003/03**

(73) Titulaires:
• **Orange**
**75015 Paris (FR)**
• **TELEDIFFUSION DE FRANCE**
**75932 Paris Cédex 15 (FR)**

(72) Inventeurs:
• **PHILIPPE, Pierrick**
**F-35250 Chevaigne (FR)**
• **COLLEN, Patrice**
**F-35000 Rennes (FR)**

(74) Mandataire: **Santarelli**
**49, avenue des Champs-Elysées**
**75008 Paris (FR)**

(56) Documents cités:
EP-A- 0 994 464        WO-A-98/57436
WO-A2-00/45379      WO-A2-98/57436
JP-A- H08 123 495   US-A- 5 068 899
US-A- 5 842 160

• DATABASE INSPEC [en ligne] INSTITUTE OF ELECTRICAL ENGINEERS, STEVENAGE, GB; LEIS J W: "A class of nonlinear predictor functions for the speech signal" Database accession no. 5679741 XP002155888 & FOURTH INTERNATIONAL SYMPOSIUM ON SIGNAL PROCESSING AND ITS APPLICATIONS. ISSPA 96. PROCEEDINGS MAIN SYMPOSIUM, PROCEEDINGS OF FOURTH INTERNATIONAL SYMPOSIUM ON SIGNAL PROCESSING AND ITS APPLICATIONS, GOLD COAST, QLD., AUSTRALIA, 25-30 AUG. 1996, pages 567-570 vol.2, 1996, Brisbane, Qld., Australia, Queensland Univ. Technol, Australia ISBN: 1-86435-210-8
• HEIDE D A ET AL: "SPEECH ENHANCEMENT FOR BANDLIMITED SPEECH" SEATTLE, WA, MAY 12 - 15, 1998,NEW YORK, NY: IEEE,US, vol. CONF. 23, 12 mai 1998 (1998-05-12), pages 393-396, XP000854598 ISBN: 0-7803-4429-4
• YASUKAWA H: "SPECTRUM BROADENING OF TELEPHONE BAND SIGNALS USING MULTIRATE PROCESSING FOR SPEECH QUALITY ENHANCEMENT" IEICE TRANSACTIONS ON FUNDAMENTALS OF ELECTRONICS, COMMUNICATIONS AND COMPUTER SCIENCES,JP,INSTITUTE OF ELECTRONICS INFORMATION AND COMM. ENG. TOKYO, vol. E78-A, no. 8, 1 août 1995 (1995-08-01), pages 996-998, XP000536056 ISSN: 0916-8508
• SCHNITZLER J: "A 13.0 KBIT/S WIDEBAND SPEECH CODEC BASED ON SB-ACELP" SEATTLE, WA, MAY 12 - 15, 1998,NEW YORK, NY: IEEE,US, vol. CONF. 23, 12 mai 1998 (1998-05-12), pages 157-160, XP000854539 ISBN: 0-7803-4429-4

EP 1 275 109 B2

- **VISWANATHAN R. ET AL: 'VOICE-EXCITED LPC CODERS FOR 9.6 KBPS SPEECH TRANSMISSION' IEEE 1979,**

- **VISWANATHAN R. ET AL: 'VOICE-EXCITED LPC CODERS FOR 9.6 KBPS SPEECH TRANSMISSION' IEEE 1979,**

**Description**

La présente invention concerne une méthode et un dispositif d'enrichissement spectral d'un signal à spectre incomplet. Plus particulièrement, la présente invention trouve application dans l'amélioration du décodage d'un signal audio codé par un codeur à limitation de bande spectrale.

En codage audio à réduction de débit, le signal audio doit souvent subir une limitation de bande passante lorsque le débit binaire devient faible. Cette limitation de bande passante est nécessaire pour éviter l'introduction de bruit de quantification audible dans le signal codé. Il est alors souhaitable de régénérer dans la mesure du possible le contenu haute fréquence du signal original.

Il est connu de l'état de la technique et notamment du document WO-A9857436 de régénérer le contenu spectral haute fréquence du signal original en procédant à une transposition harmonique du spectre basse fréquence du signal décodé vers les hautes fréquences. Cette transposition est effectuée en recopiant la valeur spectrale d'un fondamental à fk à toutes les fréquences de la série harmonique n*fk.

La forme du spectre haute fréquence ainsi obtenue est ajustée en appliquant des facteurs de pondération spectrale.

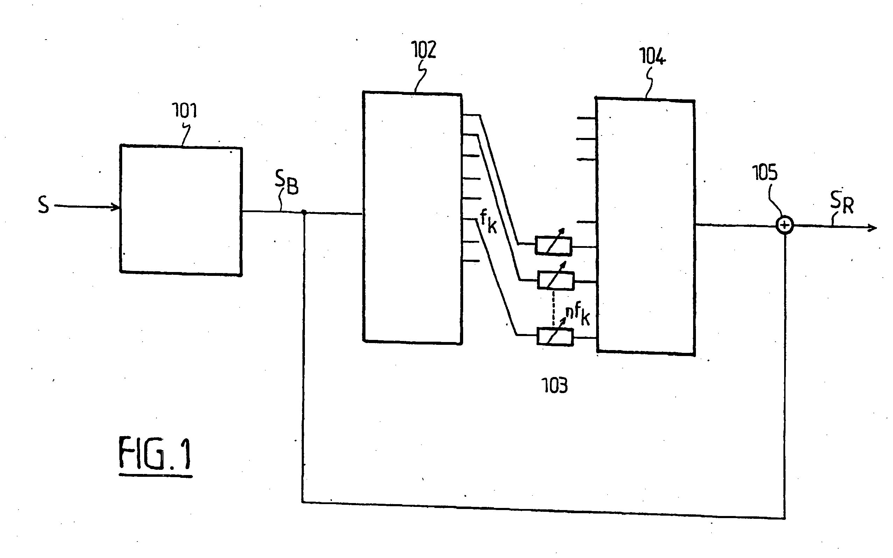

La Fig. 1 illustre schématiquement le dispositif de reconstruction spectrale selon l'état de la technique. Le signal audio codé est décodé par un décodeur (101) qui fournit un signal $S_B$, de spectre basse fréquence, à une batterie de filtres d'analyse (102) les sorties (k) de ces filtres sont connectées aux entrées de rangs harmoniques n*k (n=1.. N) d'une batterie de filtres de synthèse (104) après avoir été pondérées par des facteurs de pondération spectrale (103). Par souci de simplicité les décimateurs en sortie du banc de filtre d'analyse (respectivement les interpolateurs du banc de filtre de synthèse) n'ont pas été représentés.

Le signal résultant de la synthèse, $S_H$, possède un spectre haute fréquence. Il est additionné au signal $S_B$ par un sommateur (105) pour générer un signal large bande reconstruit $S_R$.

La technique de reconstruction exposée ci-dessus est fondée sur une analyse en sous-bandes et une duplication harmonique complexe. Elle met en oeuvre des méthodes d'ajustement de phase et d'amplitude coûteuses en calcul. En outre les facteurs de pondération spectrale ne modélisent que grossièrement l'enveloppe spectrale.

De manière générale, en dehors de tout contexte de décodage, il importe de pouvoir enrichir le contenu spectral d'un signal physique à spectre incomplet. On appelle spectre incomplet tout spectre à support borné ou tout spectre présentant des "trous". Ce sera le cas notamment pour un signal audio ou d'un signal de parole à bande limitée: un enrichissement spectral améliore alors sensiblement l'impression de qualité sonore et l'intelligibilité du signal.

Le problème à la base de l'invention est la réalisation d'un dispositif de reconstruction spectrale et plus généralement d'un dispositif d'enrichissement spectral qui soit performant et de faible complexité.

Un problème subsidiaire à la base d'un mode de réalisation de l'invention est d'obtenir une mise en forme spectrale du signal reconstruit qui soit tout à la fois plus précise et plus simple que dans l'état de la technique.

Le problème à la base de l'invention est résolu par le procédé revendiqué en revendication 1 et par le dispositif revendiqué en revendication 13.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 représente schématiquement un dispositif de reconstruction spectrale d'un signal audio selon l'état de la technique ;

la Fig. 2 représente schématiquement un dispositif d'enrichissement spectral selon l'invention;

la Fig. 3a représente un module de transposition spectrale utilisable dans un mode de réalisation de l'invention;

la Fig. 4 illustre schématiquement le procédé d'enrichissement spectral selon un mode de réalisation de l'invention ;

la Fig. 5 représente schématiquement un système selon l'invention comprenant un codeur et un décodeur avec dispositif d'enrichissement spectral ;

Nous nous plaçons à nouveau dans le cas de l'enrichissement spectral d'un signal $S_B$ à spectre incomplet et notamment d'un signal à bande limitée.

La présente invention exploite le fait qu'un signal, sous certaines hypothèses de stationnarité, peut être modélisé comme le résultat du filtrage d'un signal d'excitation par un filtre d'enveloppe spectrale. Si l'on dispose d'une description de l'enveloppe spectrale du signal $S_B$, il est alors possible de blanchir son spectre en le faisant passer dans un filtre blanchisseur de fonction de transfert (approximativement) inverse à la fonction d'enveloppe. On obtient ainsi une approximation du signal d'excitation initial, débarrassée de l'influence de la forme spectrale dans la bande considérée.

Ainsi, dans le cas particulier d'un signal de parole, le signal d'excitation sera débarrassé de sa structure formantique. L'invention propose d'enrichir le spectre du signal $S_B$ en transposant le spectre blanchi. Le signal résultant est un signal à spectre transposé qui doit être mis en forme. Cette mise en forme spectrale est réalisée par un filtre de mise en forme dont la fonction de transfert est, par exemple extrapolée à partir de la fonction d'enveloppe spectrale du signal $S_B$.

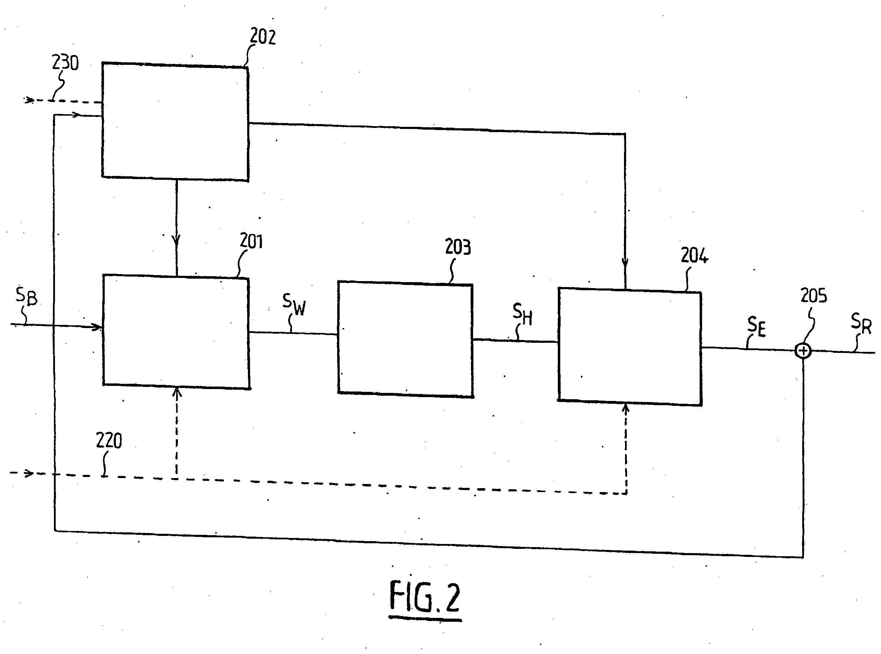

La Fig. 2 représente un dispositif d'enrichissement spectral selon l'invention. Le signal à spectre incomplet, typiquement un signal audio à bande limitée (par exemple à la bande 0-5kHz) est filtré par un filtre blanchisseur (201) dont la fonction de transfert est obtenue à partir d'une estimation de l'enveloppe spectrale. L'estimation d'enveloppe spectrale est effectuée par un module (202) du dispositif d'enrichissement. Selon un premier mode de réalisation de l'invention, l'enveloppe spectrale est estimée à partir d'une analyse du signal à spectre incomplet. Selon un second mode de réalisation de l'invention, l'enveloppe est estimée à partir d'une information fournie par une source extérieure, par exemple un décodeur. Dans les deux cas la fonction de transfert du filtre blanchissant est l'inverse de la fonction d'enveloppe spectrale.

Le signal de spectre blanchi, $S_w$, est soumis à une transposition spectrale par un module de transposition (203). Le signal à spectre décalé obtenu, $S_H$, typiquement un signal à spectre translaté vers les hautes fréquences (5-10 kHz par exemple dans le cas du signal audio précédent), est ensuite filtré par un filtre de mise en forme (204). Selon un premier mode de réalisation, sa fonction de transfert est extrapolée à partir de la fonction d'enveloppe spectrale du signal $S_B$. Selon un second mode de réalisation, la fonction de transfert est estimée à partir d'une information extérieure décrivant l'enveloppe spectrale d'un signal pleine bande dont $S_B$ est issu. Le signal filtré, Se, que nous nommerons signal d'enrichissement spectral, est ajouté au signal à spectre limité $S_B$ par un sommateur (205) pour générer un signal enrichi (ou reconstruit) spectralement $S_R$.

Le module (202) d'estimation d'enveloppe spectrale peut par exemple modéliser l'enveloppe par une analyse LPC, telle que décrite dans l'article de J. Makhoul, intitulé « Linear Prédiction : a tutorial review », Proceedings of the IEEE Vol. 63, N°4, pp 561-580. Le signal S est modélisé selon un modèle autorégressif d'ordre P:

$$s_n = -\sum_{k=1}^{P} a_k s_{n-k} + G u_n$$

où $s_n$ représente le signal à modéliser, $a_k$ sont les coefficients de prédiction (ou encore coefficients LPC), $u_n$ est le résidu de la prédiction, P est l'ordre du filtre utilisé, c'est-à dire le nombre de coefficients du filtre LPC utilisé. $G$ est un gain de normalisation. Ce filtre LPC modélise le signal S sous la forme :

$$S(z) = G \Big/ A(z) \text{ avec } A(z) = \sum_{i=0}^{P} a_i\, z^{-i} \; ; \;\; a_0 = 1$$

En choisissant convenablement l'ordre P du filtre (p suffisamment élevé) et les valeurs des coefficients LPC on peut rendre le résidu de prédiction $u_n$, spectralement blanc (ou quasi-blanc). Le résultat du filtrage de $S(z)$ par le filtre $A(z)$ étant $U(z)$, le filtre $A(z)$ est également appelé filtre blanchisseur. Le calcul des coefficients de ce filtre est classique en soi (par exemple au moyen de l'algorithme de Levinson-Durbin).
La forme du spectre est alors modélisée par:

$$\hat{S}(\omega) = \frac{G^2}{\rho(0) + 2\sum_{i=1}^{P} \rho(i)\cos(\omega i)}$$

Avec la convention suivante :

$$\rho(i) = \sum_{k=0}^{P-i} a_k a_{k+i} \quad a_0 = 1, \quad 0 \le i \le P$$

L'évaluation des coefficients $a_k$ peut avoir été faite directement par analyse LPC du signal à spectre limité $S_B$ ou encore à partir d'une information extérieure (fournie par exemple par un décodeur comme décrit plus loin). Ce mode de réalisation est illustré par la ligne en pointillés (230).

L'évaluation des coefficients $a_k$ peut également avoir été faite par analyse LPC du signal pleine bande original. Ce sera le cas par exemple si le signal $S_B$ est issu d'un codage à limitation de bande: le codeur pourra fournira les coefficients LPC (directement ou sous leur forme réduite et quantifiée) au dispositif d'enrichissement, les valeurs des coefficients permettant de retrouver la forme spectrale du spectre pleine bande. Ce mode de réalisation est illustré par la ligne en pointillés(220).

La détermination des coefficients est réalisée sur un support temporel qui peut être choisi pour correspondre au mieux aux stationnarités locales du signal. Ainsi dans le cas d'un signal non stationnaire on découpera la portion du signal à analyser en sous trames homogènes en terme de contenu spectral. Cette homogénéité peut être mesurée directement grâce à l'analyse spectrale en mesurant la distance entre les spectres estimés sur chacune des sous-trames puis en regroupant les filtres des zones similaires.

L'information décrivant l'enveloppe spectrale peut, bien entendu, être autre que les coefficients LPC, il suffit qu'elle permette de modéliser l'enveloppe spectrale sous la forme d'un filtre. On peut concevoir par exemple que cette information soit disponible sous forme de vecteurs d'un dictionnaire de formes spectrales : il suffit que les coefficients du filtre de modélisation puissent en être alors déduits. La fonction de transfert du filtre blanchisseur est choisie comme l'inverse de la fonction de transfert du filtre de modélisation d'enveloppe.

Le blanchiment par le filtre (201) peut aussi bien être effectué dans le domaine temporel que le domaine fréquentiel.

De la même façon, le module de transposition spectrale (203) peut opérer dans le domaine fréquentiel ou dans le domaine temporel. L'opération de transposition est une simple translation.

L'opération de transposition est triviale dans le domaine fréquentiel et ne sera donc pas décrite.

La transposition est aussi réalisable dans le domaine temporel.

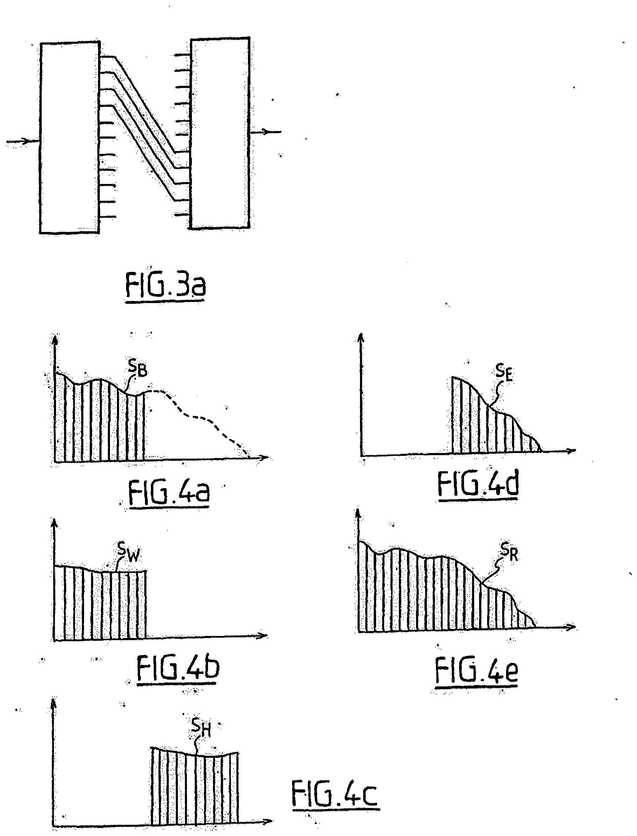

La transposition est réalisée au moyen d'un banc de filtres d'analyse et d'un banc de filtres de synthèse (par exemple par un banc de filtres polyphasés) comme illustré en figure 3a. La translation est effectuée grâce à la connexion des sorties des filtres d'analyse aux entrées de rangs translatés des entrées des filtres de synthèse (3a).

La transposition peut concerner tout ou partie de la bande initiale. Plusieurs transpositions dans la bande cible à des fréquences différentes sont envisageables avant l'étape de mise en forme spectrale. En outre la transposition peut intervenir soit après soit avant le blanchiment spectral soit encore être conjuguée avec ce dernier.

Après transposition dans la bande cible le signal est mis en forme par un filtre de mise en forme (204). Plusieurs modes de réalisation sont possibles.

Tout d'abord si le dispositif d'enrichissement spectral reçoit une information d'enveloppe spectrale pleine bande (par exemple dans le cas d'un signal issu d'un codage à limitation de bande évoqué plus haut), cette information pourra être utilisée pour estimer la fonction de transfert du filtre de mise en forme. Ce sera le cas par exemple si l'on dispose des coefficients LPC du signal pleine bande. Le spectre de la bande cible aura alors la forme de l'enveloppe dans la bande considérée. Ce mode de réalisation est illustré par la ligne en pointillés (220).

Ensuite la fonction de transfert peut être obtenue par extrapolation de l'enveloppe spectrale de la bande initiale. Différentes méthodes d'extrapolation peuvent être envisagées, notamment toute méthode modélisant l'enveloppe spectrale.

Dans le cas particulier où les coefficients LPC ont été estimés par le module (202) à partir de l'enveloppe de la bande initiale, il est avantageux d'utiliser un filtre de mise en forme possédant pour coefficients ces coefficients LPC.

Si la transposition est conjuguée au blanchiment, le filtrage blanchissant et le filtrage consécutif de mise en forme peuvent être réalisés en une seule opération par un filtre de fonction de transfert égale au produit des fonctions de transfert respectives du filtre blanchisseur et du filtre de mise en forme.

La Fig. 4 illustre le procédé d'enrichissement spectral selon un mode de réalisation de l'invention. Plus précisément donne une représentation schématique des différents signaux $S_B$, $S_w$, $S_H$, $S_E$, $S_R$ dans le cas particulier où le spectre incomplet est limité à une bande basse fréquence et la bande cible est la bande adjacente haute fréquence (cas typique d'une application audio). La transposition est supposée postérieure au blanchiment.

La Fig. 4a représente le spectre du signal basse fréquence SB ainsi que l'enveloppe spectrale pleine bande. Celle-ci est soit déterminée en extrapolant l'enveloppe du signal basse fréquence (courbe en pointillés) soit fournie par une source d'information extérieure donnant la description d'enveloppe pleine bande.

La Fig. 4b représente le spectre du signal Sw après blanchiment spectral.

La Fig. 4c représente le spectre du signal SH après transposition spectrale. La transposition choisie ici est une simple translation.

La Fig. 4d représente le spectre du signal après mise en forme spectrale SE.

La Fig. 4e représente le spectre du signal enrichi spectralement ou reconstruit SR.

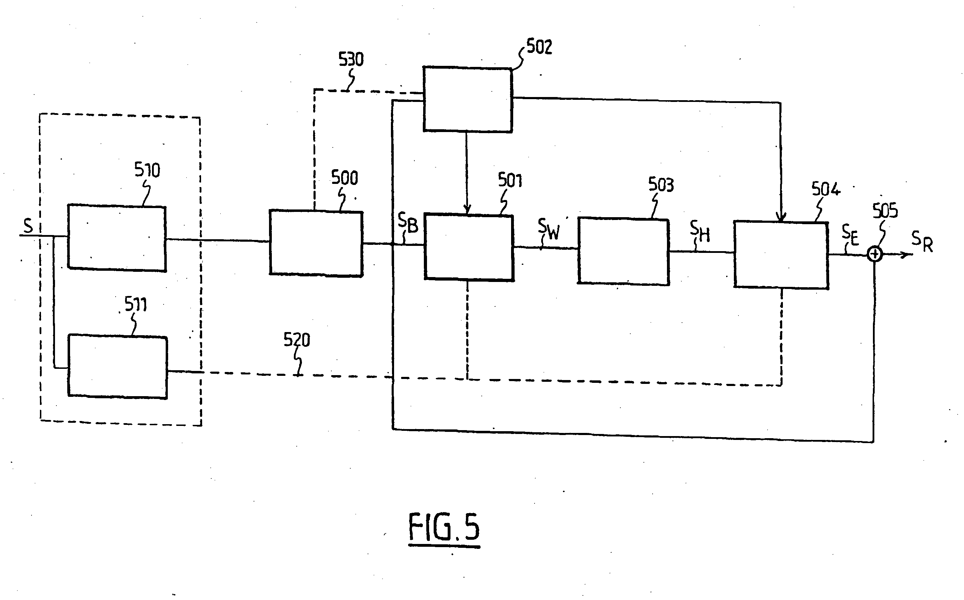

La Fig. 5 représente un système selon l'invention comprenant un codeur à limitation de bande (510) ainsi qu'un décodeur (500) associé à un dispositif d'enrichissement spectral tel que déjà décrit.

Le codeur peut fournir grâce à un module d'estimation spectrale (511) une information décrivant l'enveloppe spectrale du signal pleine bande. Alternativement, il peut fournir une information décrivant l'enveloppe spectrale du signal dans une ou plusieurs bandes devant faire l'objet de la mise en forme. Cette information peut alors être utilisée directement par le filtre de mise en forme spectrale comme on l'a vu plus haut. Le cas échéant l'information transmise par le codeur sera utilisée pour corriger la fonction de transfert du filtre blanchisseur de sorte que le résultat de l'opération blanchiment-transposition-mise en forme reconstitue au mieux l'enveloppe spectrale du signal avant codage. Ce mode de réalisation est illustré par la ligne en pointillés (520).

Le décodeur fournit un signal à spectre incomplet ou limité qui est susceptible d'enrichissement spectral selon le procédé décrit plus haut. Il s'agit alors à proprement parler d'une reconstruction spectrale, une partie du spectre du signal source S original ayant été tronquée par le codage. En sus du signal décodé à spectre incomplet, le décodeur peut également fournir lui-même une information relative à l'enveloppe spectrale de ce signal utilisable par le module d'estimation d'enveloppe (502). Ce mode de réalisation est illustré par la ligne en pointillés (530). Si le décodeur ne fournit que le signal décodé à spectre incomplet, l'enveloppe spectrale sera estimée à partir de ce dernier signal.

Une application typique du système selon l'invention est celle de la reconstruction spectrale d'un signal audio codé par un codeur perceptif. Le codeur audio peut être à réduction de débit du type par transformée (par exemple MPEG1, MPEG2 ou MPEG4-GA) ou de type CELP (ITU G72X) ou même paramétrique (type MPEG4 paramétrique).

Pour un même débit transmis la qualité sonore perçue sera améliorée, le son devenant "plus clair". Alternativement le débit peut être diminué pour une qualité équivalente. Un exemple de configuration est la suivante : transmission d'un signal codé à 24kbit/s avec adjonction de 2 kbit/s d'informations spectrales haute fréquence. La qualité du signal à 26 kbit/s ainsi obtenue équivaut à celle d'un signal à 64 kbit/s environ, sans le dispositif de l'invention.

Les applications de l'invention sont multiples et ne se limitent pas à la reconstruction spectrale de signaux audio. L'invention est susceptible de reconstruire un signal physique quelconque et notamment un signal de parole.

Enfin l'invention n'est pas, comme on l'a vu, limitée à la reconstruction spectrale d'un signal original préexistant mais peut s'appliquer à l'enrichissement spectral d'un signal en général.

## Revendications

1. Procédé d'enrichissement du contenu spectral d'un signal décodé ayant un spectre incomplet incluant une première bande spectrale, le procédé comprenant les étapes suivantes :

   au moins une transposition, constituée d'une simple translation du contenu spectral de ladite première bande dans une seconde bande spectrale dont aucune fréquence n'est inclue dans ledit spectre, en filtrant le signal à spectre incomplet par un banc de filtres d'analyse et en appliquant leurs sorties sur des entrées de rangs translatés d'un banc de filtres de synthèse pour générer un signal à spectre translaté, de spectre limité à ladite seconde bande spectrale ;
   mise en forme du spectre du signal à spectre translaté pour obtenir un signal d'enrichissement ;
   ajout du signal d'enrichissement au signal à spectre incomplet pour produire un signal à spectre enrichi ;
   la génération du signal à spectre translaté comprenant une étape de blanchiment dudit contenu spectral de sorte que le spectre du signal à spectre translaté est une version blanchie dudit contenu spectral.

2. Procédé d'enrichissement de contenu spectral selon la revendication 1, **caractérisé en ce que** la seconde bande spectrale est adjacente à la première.

3. Procédé d'enrichissement de contenu spectral selon l'une quelconque des revendications précédentes, **caractérisé en ce que** le blanchiment du contenu spectral est effectué en filtrant le signal à spectre incomplet par un filtre blanchisseur.

4. Procédé d'enrichissement de contenu spectral selon la revendication 3, **caractérisé en ce que** la fonction de transfert du filtre blanchisseur est obtenue à partir d'une information donnant l'enveloppe spectrale du signal à spectre incomplet.

5. Procédé d'enrichissement de contenu spectral selon la revendication 4, **caractérisé en ce que** l'information donnant l'enveloppe comprend des coefficients LPC du signal à spectre incomplet.

6. Procédé d'enrichissement de contenu spectral selon l'une quelconque des revendications 4 ou 5, **caractérisé en ce que** la mise en forme du spectre est réalisée en filtrant le signal à spectre translaté par un filtre de mise en forme.

7. Procédé d'enrichissement de contenu spectral selon la revendication 6, **caractérisé en ce que** la fonction de transfert du filtre de mise en forme est obtenue en extrapolant l'enveloppe spectrale du signal à spectre incomplet.

**8.** Procédé d'enrichissement de contenu spectral selon la revendication 6, **caractérisé en ce que** la fonction de transfert du filtre de mise en forme est obtenue à partir d'une information donnant l'enveloppe spectrale d'une version à spectre complet du signal à spectre incomplet.

**9.** Procédé d'enrichissement de contenu spectral selon la revendication 8, **caractérisé en ce que** la fonction de transfert du filtre blanchisseur est corrigée en fonction de ladite information donnant l'enveloppe spectrale de la version à spectre complet.

**10.** Procédé d'amélioration de décodage de signal à spectre incomplet, en particulier d'un signal audio à bande limitée, ledit signal à spectre incomplet ayant été obtenu par un codage à limitation de spectre d'un signal source large bande, par exemple un codage perceptif, **caractérisé en ce que** l'amélioration consiste à enrichir le signal décodé par le procédé d'enrichissement spectral selon l'une des revendications 1 à 9.

**11.** Procédé d'amélioration de décodage de signal à spectre incomplet, en particulier d'un signal audio à bande limitée, ledit signal à spectre incomplet ayant été obtenu par un codage à limitation de spectre d'un signal source large bande, par exemple un codage perceptif, **caractérisé en ce que** l'amélioration consiste à enrichir le signal décodé par le procédé d'enrichissement spectral selon l'une des revendications 6 ou 7 et **en ce que** l'information donnant l'enveloppe spectrale du signal à spectre incomplet est fournie par l'étape de décodage.

**12.** Procédé d'amélioration de décodage de signal à spectre incomplet, en particulier d'un signal audio à bande limitée, le signal à spectre incomplet ayant été obtenu par un codage à limitation de spectre d'un signal source large bande, **caractérisé en ce que** le codage fournissant une information donnant l'enveloppe spectrale du signal source large bande, l'amélioration consiste à enrichir le signal décodé par le procédé d'enrichissement spectral selon l'une des revendications 8 ou 9, la version à spectre complet du signal à spectre incomplet étant le signal source large bande.

**13.** Dispositif d'enrichissement du contenu spectral d'un signal ayant un spectre incomplet incluant une première bande spectrale **caractérisé en ce qu'**il est adapté à mettre en oeuvre les étapes du procédé selon l'une des revendications 1 à 9.

**14.** Dispositif additionnel à un décodeur de signal, le signal à décoder provenant d'un codeur à limitation de bande, par exemple un codeur audio perceptif, **caractérisé en ce que** le dispositif additionnel est adapté à mettre en oeuvre les étapes du procédé selon la revendication 10.

**15.** Dispositif de réception comprenant un décodeur de signal codé par un codeur à limitation de bande, par exemple un codeur audio perceptif, et un dispositif additionnel adapté à mettre en oeuvre les étapes du procédé selon l'une des revendications 10 ou 11.

**16.** Dispositif de codage/décodage comprenant un codeur à limitation de bande, par exemple un codeur perceptif, recevant un signal source et produisant un signal codé, un estimateur de spectre donnant une information d'enveloppe spectrale du signal source pleine bande, un décodeur du signal codé et un dispositif additionnel adapté à mettre en oeuvre les étapes du procédé selon la revendication 12.

**Patentansprüche**

**1.** Verfahren zum Anreichern eines Spektralinhalts eines dekodierten Signals, das ein unvollständiges Spektrum hat, das ein erstes Spektralband umfasst, wobei das Verfahren die folgenden Schritte umfasst:

- mindestens eine Transposition, die durch einfache Übersetzung des Spektralinhalts des ersten Bands in ein zweites Spektralband, von dem keine Frequenz in dem Spektrum enthalten ist, durch Filtern des Signals mit unvollständigem Spektrum durch eine Analysefilterbank und durch Anlegen ihrer Ausgänge auf Eingänge verschobener Reihen einer Synthesefilterbank gebildet wird, um ein Signal mit übersetztem Spektrum zu erzeugen, wobei das Spektrum auf das zweite Spektralband beschränkt ist;
- Formung des Spektrums des Signals mit übersetztem Spektrum, um ein Anreicherungssignal zu erzielen;
- Anfügen des Anreicherungssignals an das Signal mit unvollständigem Spektrum, um ein Signal mit angereichertem Spektrum zu erzeugen; wobei das Erzeugen des Signals mit übersetztem Spektrum einen Schritt eines Bleichens des Spektralinhalts derart umfasst, dass das Spektrum des Signals mit übersetztem Spektrum eine gebleichte Version des Spektralinhalts ist.

**2.** Verfahren zum Anreichern des Spektralinhalts nach Anspruch 1, **dadurch gekennzeichnet, dass** das zweite Spektralband neben dem ersten liegt.

**3.** Verfahren zum Anreichern des Spektralinhalts nach einem der vorhergehenden Ansprüche, **dadurch gekennzeichnet, dass** das Bleichen des Spektralinhalts durch Filtern des Signals mit unvollständigem Spektrum durch ein Bleichungsfilter durchgeführt wird.

**4.** Verfahren zum Anreichern des Spektralinhalts nach Anspruch 3, **dadurch gekennzeichnet, dass** die Transferfunktion des Bleichungsfilters ausgehend von einer Information erzielt wird, die die Spektralhülle des Signals mit unvollständigem Spektrum ergibt.

**5.** Verfahren zum Anreichern des Spektralinhalts nach Anspruch 4, **dadurch gekennzeichnet, dass** die Information, die die Spektralhülle ergibt, LPC-Faktoren des Signals mit unvollständigem Spektrum umfasst.

**6.** Verfahren zum Anreichern des Spektralinhalts nach Anspruch 4 oder 5, **dadurch gekennzeichnet, dass** die Formung des Spektrums durchgeführt wird, indem das Signal mit übersetztem Spektrum durch ein Formungsfilter gefiltert wird.

**7.** Verfahren zum Anreichern des Spektralinhalts nach Anspruch 6, **dadurch gekennzeichnet, dass** die Transferfunktion des Formungsfilters durch Extrapolieren der Spektralhülle des Signals mit unvollständigem Spektrum erzielt wird.

**8.** Verfahren zum Anreichern des Spektralinhalts nach Anspruch 6, **dadurch gekennzeichnet, dass** die Transferfunktion des Formungsfilters ausgehend von einer Information erzielt wird, die die Spektralhülle einer Version mit vollständigem Spektrum des Signals mit unvollständigem Spektrum ergibt.

**9.** Verfahren zum Anreichern des Spektralinhalts nach Anspruch 8, **dadurch gekennzeichnet, dass** die Transferfunktion des Bleichungsfilters in Abhängigkeit von der Information korrigiert wird, die die Spektralhülle der Version mit vollständigem Spektrum ergibt.

**10.** Verfahren zum Verbessern des Decodierens eines Signals mit unvollständigem Spektrum, insbesondere eines Audiosignals mit begrenztem Band, wobei das Signal mit unvollständigem Spektrum durch ein Codieren mit Spektralbegrenzung eines Breitbandquellensignals zum Beispiel durch ein perzeptives Codieren erzielt wurde, **dadurch gekennzeichnet, dass** die Verbesserung darin besteht, das decodierte Signal durch das Verfahren zum spektralen Anreichern nach einem der Ansprüche 1 bis 9 anzureichern.

**11.** Verfahren zum Verbessern des Decodierens eines Signals mit unvollständigem Spektrum, insbesondere eines Audiosignals mit begrenztem Band, wobei das Signal mit unvollständigem Spektrum durch ein Codieren mit Spektralbegrenzung eines Breitbandquellensignals zum Beispiel durch ein perzeptives Codieren erzielt wurde, **dadurch gekennzeichnet, dass** die Verbesserung darin besteht, das decodierte Signal durch das Verfahren zum spektralen Anreichern nach Anspruch 6 oder 7 anzureichern, und dass die Information, die die Spektralhülle des Signals mit unvollständigem Spektrum ergibt, von dem Decodierungsschritt bereitgestellt wird.

**12.** Verfahren zum Verbessern des Decodierens eines Signals mit unvollständigem Spektrum, insbesondere eines Audiosignals mit begrenztem Band, wobei das Signal mit unvollständigem Spektrum durch ein Codieren mit Spektralbegrenzung eines Breitbandquellensignals erzielt wurde, **dadurch gekennzeichnet, dass**, weil das Codieren eine Information liefert, die die Spektralhülle des Breitbandquellensignals ergibt, die Verbesserung darin besteht, das decodierte Signal durch das Verfahren zum spektralen Anreichern nach Anspruch 8 oder 9 anzureichern, wobei die Version mit vollständigem Spektrum des Signals mit unvollständigem Spektrum das Breitbandquellensignal ist.

**13.** Vorrichtung zum Anreichern des Spektralinhalts eines Signals, das ein unvollständiges Spektrum hat, das ein erstes Spektralband umfasst, **dadurch gekennzeichnet, dass** sie angepasst ist, um die Schritte des Verfahrens nach einem der Ansprüche 1 bis 9 anzuwenden.

**14.** Zusätzliche Vorrichtung für einen Signaldecodierer, wobei das zu decodierende Signal von einem Codierer mit Bandbegrenzung stammt, zum Beispiel einem perzeptiven Audiocodierer, **dadurch gekennzeichnet, dass** die zusätzliche Vorrichtung geeignet ist, um die Schritte des Verfahrens nach Anspruch 10 anzuwenden.

15. Empfangsvorrichtung, die einen Decodierer eines von einem Codierer mit Bandbegrenzung, zum Beispiel einem perzeptiven Audiocodierer, codierten Signals, und eine zusätzliche Vorrichtung umfasst, die dazu geeignet ist, die Schritte des Verfahrens nach Anspruch 10 oder 11 anzuwenden.

16. Vorrichtung zum Codieren/Decodieren, die einen Codierer mit Bandbegrenzung, zum Beispiel einen perzeptiven Codierer, der ein Quellensignal empfängt und ein codiertes Signal erzeugt, einen Spektralschätzer, der eine Spektralhülleninformation des Vollbandquellensignals ergibt, einen Decodierer des codierten Signals und eine zusätzliche Vorrichtung umfasst, die dazu geeignet ist, die Schritte des Verfahrens nach Anspruch 12 durchzuführen.

**Claims**

1. A method of enriching spectral content of a decoded signal having an incomplete spectrum including a first spectral band, the method comprising the following steps:

   at least one transposition, constituted by a simple translation of the spectral content of said first band into a second spectral band of which no frequency is included in said spectrum, by filtering the incomplete spectrum signal by an analysis filter bank and by applying their outputs to translated order inputs of a synthesis filter bank to generate a translated spectrum signal, of spectrum limited to said second spectral band;
   shaping the spectrum of the translated spectrum signal to obtain an enrichment signal;
   adding the enrichment signal to the incomplete spectrum signal to produce an enriched spectrum signal;
   generating the translated spectrum signal comprising a step of whitening said spectral content such that the spectrum of the translated spectrum signal is a whitened version of said spectral content.

2. A method of enriching spectral content according to claim 1, **characterized in that** the second spectral band is adjacent to the first.

3. A method of enriching spectral content according to any one of the preceding claims, **characterized in that** the whitening of the spectral content is carried out by filtering the incomplete spectrum signal by a whitening filter.

4. A method of enriching spectral content according to claim 3, **characterized in that** the transfer function of the whitening filter is obtained from an information item giving the spectral envelope of the incomplete spectrum signal.

5. A method of enriching spectral content according to claim 4, **characterized in that** the information item giving the envelope comprises LPC coefficients of the incomplete spectrum signal.

6. A method of enriching spectral content according to any one of claims 4 or 5, **characterized in that** the shaping of the spectrum is carried out by filtering the translated spectrum signal by a shaping filter.

7. A method of enriching spectral content according to claim 6, **characterized in that** the transfer function of the shaping filter is obtained by extrapolating the spectral envelope of the incomplete spectrum signal.

8. A method of enriching spectral content according to claim 6, **characterized in that** the transfer function of the shaping filter is obtained from an information item giving the spectral envelope of a complete spectrum version of the incomplete spectrum signal.

9. A method of enriching spectral content according to claim 8, **characterized in that** the transfer function of the whitening filter is corrected according to said information item giving the spectral envelope of the complete spectrum version.

10. A method of improvement of incomplete spectrum signal decoding, in particular for a limited-band audio signal, said incomplete spectrum signal having been obtained by spectrum limitation coding of a wide band source signal, for example perceptive coding, **characterized in that** the improvement consists of enriching the decoded signal by the spectral enriching method according to one of claims 1 to 9.

11. A method of improvement of incomplete spectrum signal decoding, in particular for a limited-band audio signal, said incomplete spectrum signal having been obtained by spectrum limitation coding of a wide band source signal, for example perceptive coding, **characterized in that** the improvement consists of enriching the decoded signal by the spectral enriching method according to one of claims 6 or 7 and **in that** the information item giving the spectral envelope of the incomplete spectrum signal is provided by the decoding step.

12. A method of improvement of incomplete spectrum signal decoding, in particular for a limited-band audio signal, the incomplete spectrum signal having been obtained by spectrum limitation coding of a wide band source signal, **characterized in that**, the coding providing an information item giving the spectral envelope of the wide band source signal, the improvement consists of enriching the decoded signal by the spectral enrichment method according to one of claims 8 or 9, the complete spectrum version of the incomplete spectrum signal being the wide band source signal.

13. A device for enrichment of the spectral content of a signal having an incomplete spectrum including a first spectral band **characterized in that** it is configured to implement the steps of the method according to one of claims 1 to 9.

14. An additional device with a signal decoder, the signal to decode coming from a band limitation coder, for example a perceptive audio coder, **characterized in that** the additional device is configured to implement the steps of the method according to claim 10.

15. A reception device comprising a decoder for decoding a signal coded by a band limitation coder, for example a perceptive audio coder, and an additional device configured to implement the steps of the method according to one of claims 10 or 11.

16. Coding/decoding device comprising a band limitation coder, for example a perceptive coder, receiving a source signal and producing a coded signal, a spectrum estimator giving a spectral envelope information item of the full band source, a decoder of the coded signal and an additional device configured to implement the steps of the method according to claim 12.

FIG.1

FIG.2

FIG.3a

FIG.4a

FIG.4d

FIG.4b

FIG.4e

FIG.4c

13

FIG.5

S

510

511

500

530

502

501

503

504

505

520

$S_B$

$S_W$

$S_H$

$S_E$

$S_R$

EP 1 275 109 B2

14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 9857436 A

**Littérature non-brevet citée dans la description**

• **J. MAKHOUL.** Linear Prédiction : a tutorial review. *Proceedings of the IEEE,* vol. 63 (4), 561-580